# EUROPÄISCHE PATENTSCHRIFT

(11) **EP 0 865 951 B1**
(45) Veröffentlichungstag und Bekanntmachung des Hinweises auf die Patenterteilung: **21.08.2002**
(21) Anmeldenummer: 98101034.1
(22) Anmeldetag: 22.01.1998
(51) Int. Cl.: B60J 7/16, B60J 7/10

(54) **Abnehmbares Hardtop für einen Personenkraftwagen**
Removable hard top for a motor car
Hardtop amovible pour un véhicule automobile

(30) Priorität: 19.03.1997 DE 19711352
(43) Veröffentlichungstag der Anmeldung: 23.09.1998
(73) Patentinhaber: Dr.Ing.h.c. F. Porsche Aktiengesellschaft, 70435 Stuttgart (DE)
(72) Erfinder: Reuter, Dieter, 71139 Ehningen (DE); Reutlinger, Peter, 75015 Bretten (DE); Gülsdorf, Stefan, 71069 Sindelfingen (DE)

(56) Entgegenhaltungen:
- DE-A- 1 530 674
- US-A- 5 033 788
- US-A- 5 544 934

## Beschreibung

Die Erfindung bezieht sich auf ein abnehmbares Hardtop für einen Personenkraftwagen gemäß dem Oberbegriff des Patentanspruchs 1.

Hardtops werden aus Kunststoff oder Metall hergestellt. Sie dienen insbesondere dazu, Cabriolets zu verschließen, wenn es die Witterung in den Wintermonaten nicht zuläßt, das Faltverdeck zu öffnen, um sich des Frischluftvergnügens zu erfreuen, das ein Cabriolet bei geöffnetem Faltverdeck bietet. Während dieser Zeit bietet ein Hardtop gegenüber einem geschlossenen Faltverdeck jedoch wenigstens den Komfort einer Limousine, vor allem im Hinblick auf die Akustik und den Wärmedurchgang.

Der DE 37 32 581 A1, welche die technischen Merkmale entsprechend dem Oberbegriff des Anspruches 1 repräsentiert, ist ein abnehmbares Hardtop für ein Cabriolet zu entnehmen, wobei der hintere untere Rand des Hardtops den Fahrgastraum - in der Draufsicht gesehen - bogenförmig umgibt.

Dieser Anordnung haftet der Nachteil an, daß die am Fahrzeug aufliegenden hinteren Seitenteile des Hardtops - insbesondere im Fahrbetrieb - relativ biegeweich sind, wodurch Verwindungen und Geräusche auftreten.

Aufgabe der Erfindung ist es, an einem Hardtop solche Vorkehrungen zu treffen, daß eine wesentliche Versteifung des Hardtops - insbesondere in Querrichtung - erzielt wird.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Anordnung einer Hutablage im hinteren unteren Bereich des Hardtops ein wesentlich steiferes Hardtop geschaffen wird, das die im Fahrbetrieb auftretenden Kräfte besser aufnehmen kann. Zugleich wird durch die Hutablage eine zusätzliche Ablagemöglichkeit geschaffen. Die Hutablage deckt den darunterliegenden, abgelegten vorderen Verdeckabschnitt des Faltverdecks ab, wodurch eine homogene, dem Coupe entsprechende Optik erzielt wird.

Durch die Hutablage wird der Raum hinter der Fondsitzanlage vollständig abgedeckt, so daß keine Kleinteile in den darunterliegenden Aufnahmeraum für das Verdeck gelangen können.

Durch die Anbringung der hardtopseitigen Verschlußteile an der Hutablage können diese außerhalb des Fahrzeuges vormontiert werden, was eine Montagevereinfachung darstellt. Durch ein derartig ausgebildetes Hardtop entsteht ein Coupe-Charakter für den Personenkraftwagen. Das Trägerteil der Hutablage, welches mit den Seitenteilen des Hardtops fest verbunden ist, bewirkt, daß ein aus Aluminiumblechen bestehendes Hardtop beim Lackieren kein Rücksprungverhalten mehr besitzt und somit eine höhere Maßhaltigkeit aufweist.

Ein Ausführungsbeispiel der Erfindung ist in der Zeichnung dargestellt und wird im folgenden näher erläutert.

Es zeigen
- Fig. 1: eine Teilseitenansicht eines Personenkraftwagens mit einem aufgesetzten Hardtop,
- Fig. 2: eine perspektivische Ansicht von hinten auf das Hardtop mit der erfindungsgemäßen Hutablage,
- Fig. 3: einen Schnitt nach der Linie III-III der Fig. 2 und
- Fig. 4: eine weitere perspektivische Ansicht des Hardtops von schräg hinten.

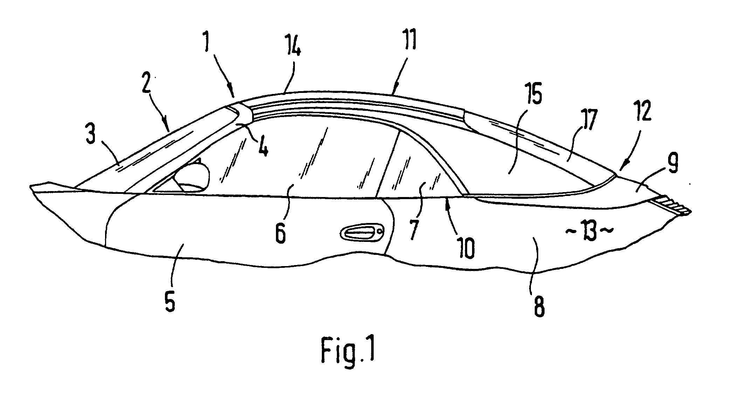

Der in Fig. 1 gezeigte Personenkraftwagen 1 umfaßt einen Aufbau 2, der sich im dargestellten Bereich aus einem mit einer Windschutzscheibe 3 versehenen Windschutzscheibenrahmen 4 einer seitlichen Tür 5 mit einer Türfensterscheibe 6, einer Fondseitenscheibe 7, einem hinteren Seitenteil 8 und einem Verdeckkastendeckel 9 zusammensetzt..

Oberhalb einer Gürtellinie 10 erstreckt sich ein abnehmbares Hardtop 11, das sich vom Windschutzscheibenrahmen 4, bis etwa zum vorderen Rand 12 des Verdeckkastendeckels 9 erstreckt. Das Hardtop 11 ist über lösbare Verschlüsse am Windschutzscheibenrahmen 4 und am feststehenden Aufbau 2 in Lage gehalten und kann dann auf den offenen Aufbau 2 aufgesetzt werden, wenn das nicht näher gezeigte Faltverdeck seine zurückgeklappte heckseitige Ablagestellung einnimmt. In der Ablagestellung befindet sich das Faltverdeck in einem heckseitigen Aufnahmeraum 13, der zumindest abschnittsweise durch den Verdeckkastendeckel 9 nach oben hin abgedeckt ist.

Im Ausführungsbeispiel besteht das Hardtop im wesentlichen aus einem Mittelteil 14 und zwei Seitenteilen 15, wobei die Seitenteile 15 im Bereich von längsgerichteten Dachkanälen 16 an das Mittelteil 14 angeschlossen sind. Beide Dachkanäle 16 werden durch nicht näher dargestellte Abdeckleisten nach oben hin verschlossen. Das Mittelteil 14 und beide Seitenteile 15 werden durch dünnwandige Blechpreßteile aus Aluminium gebildet, wobei die Verbindung durch Nieten im Bereich der Dachkanäle 16, Schweißen, Kleben oder dergleichen erfolgen kann. Im hinteren Bereich des Hardtops 11 ist eine großflächige, starre Heckscheibe 17 angeordnet, die oben und seitlich unter Vermittlung eines Klebekörpers an Aufnahmeflanschen des Hardtops 11 in Lage gehalten ist.

Zur Versteifung des Hardtops 11 ist erfindungsgemäß am unteren hinteren Rand des Hardtops 11 unterhalb der Heckscheibe 17 eine Hutablage 18 vorgesehen, die zumindest die beiden Seitenteile 15 miteinander verbindet. Die unterhalb der Heckscheibe 17 angeordnete Hutablage 18 umfaßt ein unteres Trägerteil 19 und eine obere Verkleidung 20.

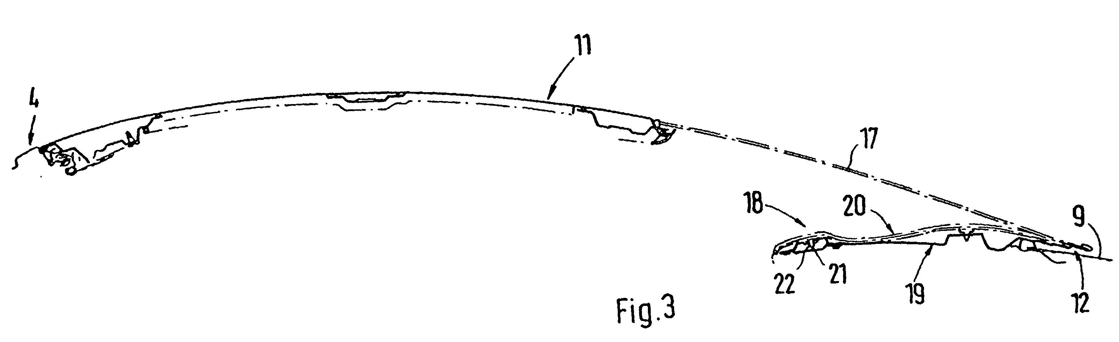

Das plattenförmige, mit einer Vielzahl von Versteifungssicken versehene Trägerteil 19 ist mit dem unteren Rand der beiden Seitenteile 15 fest verbunden. Dies kann durch Schweißen, Nieten, Schrauben, Kleben oder dergleichen erfolgen. Die Heckscheibe 17 liegt außerdem unter Zwischenschaltung eines Klebekörpers am hinteren Rand des Trägerteils 19 auf, wobei die Heckscheibe 17 das Trägerteil 19 nach hinten hin abschnittsweise überragt (Fig. 3).

Die Verkleidung 20 wird durch ein Kunststoffteil gebildet, das zumindest an seiner Oberseite mit einem Bezug aus Verdeckstoff versehen ist. Das Kunststoffteil könnte auch mit einem Teppich oder dergleichen bezogen sein. Die Festlegung der Verkleidung 20 am Trägerteil 19 erfolgt durch lösbare Befestigungselemente wie Schrauben, Clipse oder dergleichen.

Gemäß Fig. 3 sind am Trägerteil 19 örtlich Ausnehmungen 21 vorgesehen, in die Clipse 22 der Verkleidung 20 eingesetzt sind.

Die Hutablage 18 erstreckt sich nur in einem hinteren Teilbereich der Längserstreckung der in Höhe der Gürtellinie 10 aufliegenden unteren Ränder der Seitenteile 15 des Hardtops 11.

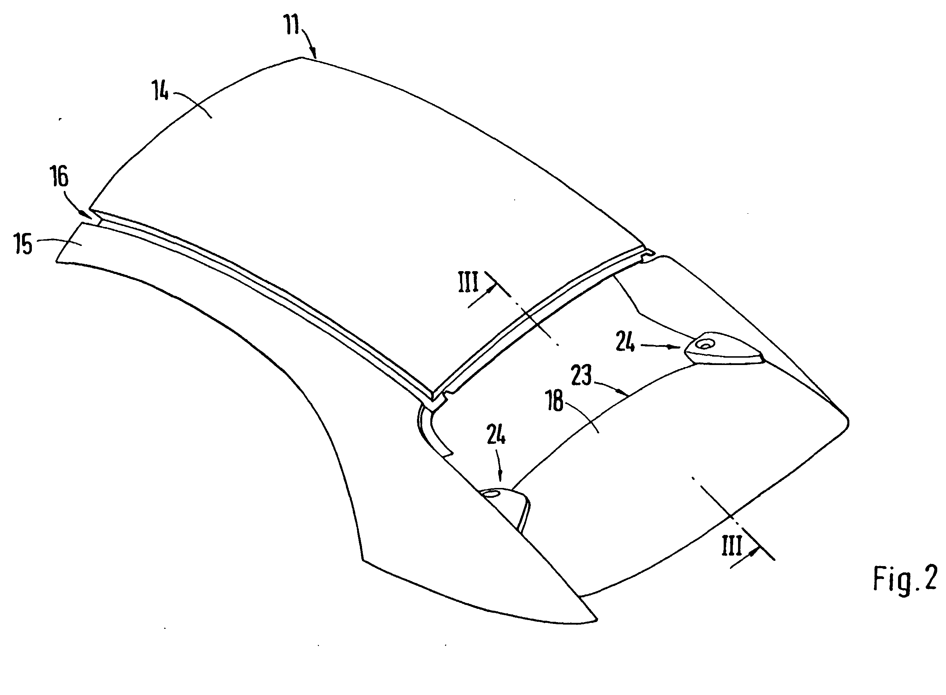

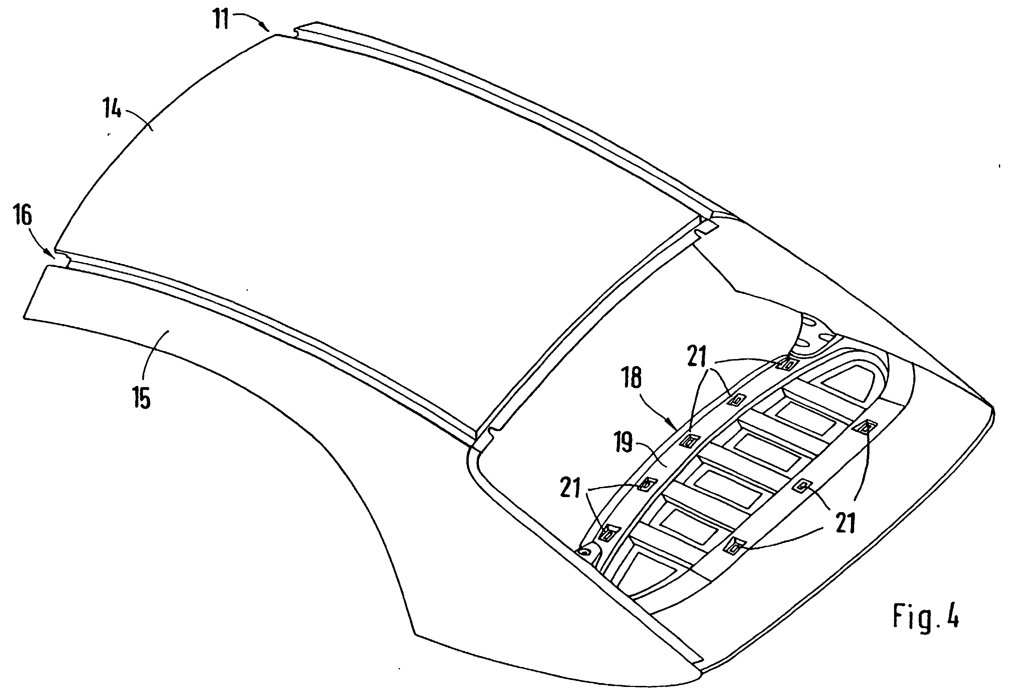

Gemäß den Figuren 2 und 4 sind am vorderen Rand 23 der Hutablage 18 und zwar an beiden seitlich außenliegenden Längsseiten, die hardtopseitigen Bauteile der lösbaren Verschlüsse 24 vorgesehen.

Die Hutablage 18 deckt bei aufgesetztem Hardtop 11 den darunterliegenden, nicht näher dargestellten zurückgeklappten vorderen Verdeckabschnitt des Faltverdecks ab. Der vordere Rand der Hutablage 18 ist an die vorgelagerte querverlaufende Abdeckung für eine darunterliegende Überrollschutzvorrichtung herangeführt, überdeckt sie aber nicht. Das aufgesetzte Hardtop 11 überlappt den vorderen Rand 12 des Verdeckkastendeckels 9 abschnittsweise.

## Patentansprüche

1. Abnehmbares Hardtop (11) für einen Personenkraftwagen, das eine Heckscheibe (17) aufweist und mittels lösbarer Verschlüsse (24) am angrenzenden Aufbau (2) festlegbar ist, **dadurch gekennzeichnet, daß** das Hardtop (11) unterhalb der Heckscheibe (17) mit einer Hutablage (18) versehen ist, die zumindest die beiden längsgerichteten Seitenteile (15) des Hardtops (11) miteinander verbindet.

2. Hardtop nach Anspruch 1, **dadurch gekennzeichnet, daß** sich die Hutablage (18) aus einem unteren Trägerteil (19) und einer darüberliegenden Verkleidung (20) zusammensetzt.

3. Hardtop nach den Ansprüchen 1 und 2, **dadurch gekennzeichnet, daß** das Trägerteil (19) an seinen beiden Längsseiten mit dem unteren Randbereich der Seitenteile (15) des Hardtops (11) fest verbunden ist.

4. Hardtop nach den Ansprüchen 1 bis 3, **dadurch gekennzeichnet, daß** am Mittelteil (14) und an den beiden Seitenteilen (15) des Hardtops Auflageflansche für den vorderen Rand und für die beiden seitlichen Ränder der Heckscheibe (17) ausgebildet sind, wogegen der hintere querverlaufende Rand der Heckscheibe (17) am Trägerteil (19) der Hutablage (18) befestigt ist.

5. Hardtop nach Anspruch 2, **dadurch gekennzeichnet, daß** die Verkleidung (20) durch ein Kunststoffteil gebildet wird, das an seiner Oberseite mit einem Bezug aus Verdeckstoff, oder Teppichboden oder dergleichen, versehen ist.

6. Hardtop nach Anspruch 1, **dadurch gekennzeichnet, daß** sich die Hutablage (18) nur in einem hinteren Teilbereich des am feststehenden Aufbau (2) aufliegenden, längsgerichteten unteren Randes der Seitenteile (15) des Hardtops (11) erstreckt.

7. Hardtop nach einem oder mehreren der vorangegangenen Ansprüche, **dadurch gekennzeichnet, daß** die hardtopseitigen Bauteile der lösbaren Verschlüsse (24) an der Hutablage (18) vorgesehen sind und zwar in einem vorderen, seitlich außenliegenden Bereich derselben.

8. Hardtop nach Anspruch 1, **dadurch gekennzeichnet, daß** die Hutablage (18) bei aufgesetztem Hardtop (11) den darunterliegenden, zurückgeklappten vorderen Verdeckabschnitt nach oben hin abdeckt und daß der vordere Rand der Hutablage (18) an eine querverlaufende, vorgelagerte Abdeckung einer Überrollschutzvorrichtung herangeführt ist.

## Claims

1. A removable hardtop (11) for a passenger car which comprises a rear window (17) and which can be secured to the adjacent body (2) by means of releasable closures (24), **characterized in that** the hardtop (11) is provided below the rear window (17) with a rear-window shelf (18) which connects at least the two longitudinally orientated lateral parts (15) of the hardtop (11) to each other.

2. A hardtop according to Claim 1, **characterized in that** the rear-window shelf (18) is formed by a lower support part (19) and a cladding (20) situated thereabove.

3. A hardtop according to Claims 1 and 2, **characterized in that** the support part (19) is firmly connected at the two longitudinal sides thereof to the lower edge region of the lateral parts (15) of the hardtop (11).

4. A hardtop according to Claims 1 to 3, **characterized in that** abutment flanges for the front edge and for the two lateral edges of the rear window (17) are formed on the middle part (14) and on the two lateral parts (15) of the hardtop, whereas the rear, transversely extending edge of the rear window (17) is secured to the support part (19) of the rear-window shelf (18).

5. A hardtop according to Claim 2, **characterized in that** the cladding (20) is formed by a plastics-material part which is provided on its upper side with a lining of folding-top fabric or floor carpeting or the like.

6. A hardtop according to Claim 1, **characterized in that** the rear-window shelf (18) extends only in a rear partial region of the longitudinally orientated lower edge - resting on the fixed body (2) - of the lateral parts (15) of the hardtop (11).

7. A hardtop according to one or more of the preceding Claims, **characterized in that** the parts of the releasable closures (24) towards the hardtop are provided on the rear-window shelf (18), namely in a front region situated laterally on the outside.

8. A hardtop according to Claim 1, **characterized in that** when the hardtop (11) is in place the rear-window shelf (18) covers at the top the front portion of the folding roof situated thereunder and folded back, and the front edge of the rear-window shelf (18) extends to a transversely extending covering of an overturning-protection device mounted at the front.

## Revendications

1. Toit rigide (11) amovible pour une voiture de tourisme qui comporte une vitre arrière (17) et qui peut être fixé à la carrosserie (2) adjacente, au moyen de fermetures (24) détachables, **caractérisé en ce que** le toit rigide (11) est pourvu, au-dessous de la vitre arrière (17), d'une tablette arrière (18) qui relie au moins entre elles les deux parties latérales (15) dirigées longitudinalement du toit rigide (11).

2. Toit rigide selon la revendication 1, **caractérisé en ce que** la tablette arrière (18) se compose d'un élément porteur (19) inférieur et d'un habillage (20) situé dessus.

3. Toit rigide selon les revendications 1 et 2, **caractérisé en ce que** l'élément porteur (19) est relié fixement, sur ses deux côtés longitudinaux, à la zone de bordure inférieure des parties latérales (15) du toit rigide (11).

4. Toit rigide selon les revendications 1 à 3, **caractérisé en ce que** sur la partie centrale (14) et sur les deux parties latérales (15) du toit rigide sont formées des brides de support pour le bord avant et pour les deux bords latéraux de la vitre arrière (17), tandis que le bord arrière transversal de la vitre arrière (17) est fixé à l'élément porteur (19) de la tablette arrière (18).

5. Toit rigide selon la revendication 2, **caractérisé en ce que** l'habillage (20) est formé par un élément en matière plastique qui est pourvu sur sa face supérieure d'un revêtement en matière pour capote, ou moquette ou similaire.

6. Toit rigide selon la revendication 1, **caractérisé en ce que** la tablette arrière (18) ne s'étend que dans une zone partielle arrière du bord inférieur, orienté longitudinalement et reposant sur la carrosserie (2) fixe, des parties latérales (15) du toit rigide (11).

7. Toit rigide selon une ou plusieurs des revendications précédentes, **caractérisé en ce que** les composants côté toit rigide des fermetures (24) détachables sont prévus sur la tablette arrière (18), à savoir dans une zone avant, située à l'extérieur latéralement.

8. Toit rigide selon la revendication 1, **caractérisé en ce que** lorsque le toit rigide (11) est mis en place, la tablette arrière (18) recouvre vers le haut la partie de capote avant située au-dessous et repliée, et **en ce que** le bord avant de la tablette arrière (18) s'étend jusqu'à un couvercle, situé devant et s'étendant transversalement, d'un dispositif de protection contre le retournement.
